# EUROPÄISCHE PATENTSCHRIFT

(11) **EP 2 435 362 B1**
(45) Veröffentlichungstag und Bekanntmachung des Hinweises auf die Patenterteilung: **25.09.2019**
(21) Anmeldenummer: 10720293.9
(22) Anmeldetag: 06.05.2010
(51) Int. Cl.: C01B 3/50, C01B 3/56, C01B 3/02

(54) **VERFAHREN ZUR HERSTELLUNG VON SYNTHESEGAS**
SYNGAS PRODUCTION METHOD
PROCÉDÉ DE PRODUCTION DE GAZ DE SYNTHÈSE

(30) Priorität: 25.05.2009 DE 102009022509
(43) Veröffentlichungstag der Anmeldung: 04.04.2012
(73) Patentinhaber: thyssenkrupp Industrial Solutions AG, 45143 Essen (DE)
(72) Erfinder: MENZEL, Johannes, 45731 Waltrop (DE)
(74) Vertreter: Lorenz, Bernd Ingo Thaddeus
(86) Internationale Anmeldenummer: PCT/EP2010/056154
(87) Internationale Veröffentlichungsnummer: WO 2010/136313

(56) Entgegenhaltungen:
- EP-A1- 0 258 208
- EP-A2- 0 200 880
- CN-A- 1 803 746
- JP-A- 57 122 025
- US-A- 4 013 454
- US-A1- 2004 226 406

## Beschreibung

Die Erfindung betrifft ein Verfahren zur Herstellung eines H₂ und CO enthaltenden Synthesegases.

Synthesegase sind Gasgemische, die in Synthesereaktionen zum Einsatz kommen und überwiegend aus Kohlenmonoxid und Wasserstoff bestehen. Für einige CO/H₂-Kombinatonen haben sich aufgrund ihrer Herkunft oder Verwendung spezielle Bezeichnungen wie Wassergas, Spaltgas, Methanolsynthesegas oder Oxogas etabliert. Das Synthesegas kann als Ausgangsstoffgemisch für die Produktion von Flüssigtreibstoffen dienen. So wird Synthesegas beispielsweise beim Fischer-Tropsch-Verfahren zur Erzeugung von Dieselkraftstoff eingesetzt. Benzinkraftstoffe können nach dem MTG-Verfahren (Methanol to Gasoline) produziert werden, bei dem Synthesegas zunächst zu Methanol umgesetzt wird, welches in weiteren Verfahrensschritten zu Benzin umgewandelt wird.

Prinzipiell können alle kohlenstoffhaltigen Stoffe zur Synthesegasherstellung eingesetzt werden. Dazu zählen sowohl die fossilen Brennstoffe Kohle, Erdöl und Erdgas als auch weitere Einsatzmaterialien wie z.B. Kunststoff, Torf, Holz oder andere Biomasse, wie städtische oder landwirtschaftliche Abfälle. Werden Feststoffe eingesetzt, müssen diese zunächst aufwendig zerkleinert werden, damit durch partielle Oxidation oder Wasserdampfspaltung ein Rohsynthesegas erzeugt werden kann. Das Rohsynthesegas wird danach in weiteren Schritten aufbereitet. Alle diese Maßnahmen führen zu hohen Investitionskosten, die ein Hindernis für die Produktion von Flüssigkraftstoffen aus Synthesegas sind.

Aus EP 0 200 880 A2 ist es bekannt, Konvertergas mit hohem CO-Anteil aus einem Hochofenprozess und Koksofengas mit hohem Wasserstoffgehalt zu mischen und als Synthesegas für eine Methanolsynthese zu nutzen. Bei dem bekannten Verfahren wird das Koksofengas zunächst einer Druckwechselabsorptionsanlage zugeführt, in der ca. 83 % des im Koksofengas enthaltenen Wasserstoffs abgetrennt wird. Das Kohlenwasserstoffe enthaltende Restgas wird verdichtet, in einer Reinigungsstufe von Katalysatorgiften befreit, anschließend konvertiert und in einem Dampfreformer mit Hilfe von Wasserdampf zu CO, CO₂ und H₂ aufgespalten. Das Spaltgas wird mit dem zuvor abgetrennten Wasserstoff und mit einer zur Erzeugung eines stöchiometrischen Synthesegases erforderlichen Menge an Konvertergas gemischt und als Methanolsynthesegas genutzt. Für die beschriebene Aufbereitung des Koksofengases sind zusätzliche Anlagen notwendig, die mit entsprechenden Investitions- und Betriebskosten verbunden sind. CN 1 803 746 A offenbart ein Verfahren zur Herstellung von Methanol aus Koksofengas und Konvertergas, wobei aus dem gereinigten Koksofengas Wasserstoff mittels Druckwechseladsorption abgetrennt und mit dem Konvertergas vermischt wird.

Aufgabe der vorliegenden Erfindung ist es, sowohl den anlagentechnischen Aufwand als auch die Betriebskosten der Synthesegaserzeugung zu reduzieren.

Gegenstand der Erfindung und Lösung dieser Aufgabe ist ein Verfahren zur Herstellung eines H₂ und CO enthaltenen Synthesegases nach Anspruch 1. Vorteilhafte Umsetzungen ergeben sich durch die Merkmale der abhängige Ansprüche.

Erfindungsgemäß wird Koksofengas aus einem Koksofenprozess in Wasserstoff und einen Kohlenwasserstoffe enthaltenden Restgasstrom aufgetrennt. Der aus dem Koksofengas abgetrennte Wasserstoff wird einem CO-reichen Synthesegasstrom zugeführt, der aus dem Gichtgas eines Hochofenprozesses gewonnen wird, und der die Kohlenwasserstoffe enthaltende Restgasstrom wird dem Hochofenprozess als Einsatzstoff zugeführt.

Bei dem in den Hochofenprozess zurückgeführten Restgasstrom handelt es sich um ein Methan- und CO-reiches Gas. Die Kohlenwasserstoffe werden als Brennstoff im Hochofenprozess genutzt. Der mit dem Restgas in den Hochofenprozess eingeführte CO-Anteil führt zu einer Erhöhung des aus dem Hochofen abgezogenen Gichtgases, das für die Synthesegasproduktion genutzt wird. Das erfindungsgemäße Verfahren ist energieeffizient und erfordert keine zusätzlichen Aufbereitungsschritte oder Anlagen.

Dem Koksofen wird Kohle zugeführt, die unter Luftausschluss auf mehr als 1000°C erhitzt wird. Dabei werden die flüchtigen Bestandteile der Kohle ausgetrieben. Sie bilden das Koksofengas. Kommen mehrere Koksöfen zum Einsatz, so werden die entstandenen Rohgase über eine Sammelleitung vereinigt. Das Koksofengas wird vor der weiteren Nutzung, d.h. vor der Auftrennung in Wasserstoff und einen die Kohlenwasserstoffe enthaltenden Restgasstrom entteert und entschwefelt, sowie von Ammoniak, Aromaten und Naphthalin befreit. Das gereinigte Kokereigas (Leuchtgas) wird vorzugsweise einer Druckwechseladsorptionsanlage (PSA-Anlage) zugeführt, in der eine Abtrennung des Wasserstoffs vom Restgas erfolgt. Die Druckwechseladsorptionsanlage kann auch als Vakuum-PSA-Anlage (VPSA) ausgeführt sein. Auf der Druckseite der Adsorptionsanlage wird reiner Wasserstoff gewonnen. Bei der Entspannung wird das Restgas frei, welches Methan und Kohlenmonoxid enthält und als Einsatzstoff dem Hochofenprozess zugeführt wird.

Der Hochofenprozess ist für eine Synthesegasproduktion eingerichtet. Der Hochofen wird mit Eisenerzen und kohlenstoffhaltigen Reduktionsmitteln beschickt, wobei die im Hochofenprozess eingesetzte Menge an kohlenstoffhaltigen Reduktionsmitteln größer ist als die für die Eisenerzeugung benötigte Brennstoffmenge. Ferner wird dem Hochofen technisch reiner Sauerstoff zur Eisengewinnung und zur Erzeugung eines als Gichtgas abgezogenen CO-reichen Synthesegases zugeführt. Zusätzlich kann dem Hochofen CO₂ und/oder Wasserdampf zugeführt werden, um das CO/H₂-Verhältnis des den Hochofen verlassenen Gichtgases zu steuern, wobei folgende Reaktionen ablaufen können:

C + Co₂ → 2 CO

C + H₂O ⇄ CO + H₂

CO₂ +H₂ → CO + H₂O

Die erfindungsgemäße Erzeugung von Synthesegas durch eine Kombination aus Kokereigas und Gichtgas eines Hochofenprozesses nutzt vorteilhaft aus, dass im Koksofen ein wasserstoffreiches und im Hochofen ein kohlenmonoxidreiches Rohgas erzeugt wird. Zudem sind die Kokereien im Regelfall in der Nähe von Hochöfen angesiedelt, da Koks für den Hochofenprozess benötigt wird. Die Produktion von Synthesegas aus Kokereigas und Gichtgas eines Hochofenprozesses ermöglicht eine gezielte stoffliche Verwertung der bei der Koks- und Eisenerzeugung anfallenden gasförmigen Nebenprodukte.

## Patentansprüche

1. Verfahren zur Herstellung eines H₂ und CO enthaltenden Synthesegases,
wobei Koksofengas aus einem Koksofenprozess in Wasserstoff und einen Kohlenwasserstoffe enthaltenden Restgasstrom aufgetrennt wird und
wobei der aus dem Koksofengas abgetrennte Wasserstoff einem CO-reichen Synthesegasstrom zugeführt wird, der aus dem Gichtgas eines Hochofenprozesses gewonnen wird, und
wobei der die Kohlenwasserstoffe enthaltende Restgasstrom dem Hochofenprozess als Einsatzstoff zugeführt wird.

2. Verfahren nach Anspruch 1, wobei das Koksofengas vor der Auftrennung in Wasserstoff und einen die Kohlewasserstoffe enthaltenden Restgasstrom entteert und entschwefelt wird, sowie von Ammoniak, Aromaten und Naphtalin befreit wird.

3. Verfahren nach Anspruch 1 oder 2, wobei das Koksofengas einer Druckwechseladsorptionsanlage zugeführt wird, die das Koksofengas in einen nahezu reinen Wasserstoffstrom und einen die Kohlenwasserstoffe enthaltenden Restgasstrom aufteilt.

4. Verfahren nach einem der Ansprüche 1 bis 3, wobei der Hochofenprozess in einem Hochofen betrieben wird, dem technisch reiner Sauerstoff zur Eisengewinnung und zur Erzeugung eines als Gichtgas abgezogenen CO-reichen Synthesegases zugeführt wird.

5. Verfahren nach Anspruch 3 oder 4, wobei die im Hochofenprozess eingesetzte Menge an kohlenstoffhaltigen Reduktionsmitteln größer ist als die für die Eisenerzeugung benötigte Brennstoffmenge.

6. Verfahren nach Anspruch 4 oder 5, wobei dem Hochofen zusätzlich CO₂ und/oder Wasserdampf zugeführt wird, um das CO/H₂-Verhältnis des den Hochofen verlassenden Gichtgases zu steuern.

## Claims

1. A method for producing a syngas containing H₂ and CO,
wherein coke oven gas from a coke oven process is separated into hydrogen and a residual gas stream containing hydrocarbons,
wherein the hydrogen separated from the coke oven gas is fed to a CO-rich syngas stream obtained from the top gas of a blast furnace process, and
wherein the residual gas stream containing the hydrocarbons is recirculated into the blast furnace process as feedstock.

2. The method according to claim 1, wherein the coke oven gas is detarred and desulfurized, and ammonia, aromatic compounds and naphthalene are removed from it before it is separated into hydrogen and a residual gas stream containing hydrocarbons.

3. The method according to claim 1 or 2, wherein the coke oven gas is fed to a pressure swing adsorption system, which splits the coke oven gas into an almost pure hydrogen stream and a residual gas stream containing the hydrocarbons.

4. The method according to any one of claims 1 to 3, wherein the blast furnace process is carried out in a blast furnace to which technically pure oxygen is fed for iron production and for generating a CO-rich syngas which is drawn off as top gas.

5. The method according to claim 3 or 4, wherein the quantity of carbon-containing reducing agents used in the blast furnace process is greater than the quantity of fuel needed for the iron production.

6. The method according to claim 4 or 5, wherein CO₂ and/or water vapour is also fed to the blast furnace process in order to control the CO/H₂ ratio in the top gas exiting the blast furnace.

## Revendications

1. Procédé, destiné à préparer un gaz de synthèse contenant du H₂ et du CO,
lors duquel on sépare du gaz de cokerie issu d'un processus de four à coke en hydrogène et en un flux de gaz résiduel contenant des hydrocarbures,
lors duquel on amène l'hydrogène séparé du gaz de cokerie vers un flux de gaz de synthèse riche en CO, qui est récupéré à partir du gaz de haut-fourneau d'un processus de four à coke et
lors duquel on amène le flux de gaz résiduel contenant les hydrocarbures en tant que charge dans le processus de four à coke.

2. Procédé selon la revendication 1, lors duquel, avant la séparation en hydrogène et en un flux de gaz résiduel contenant des hydrocarbures, on vidange et on désulfure le gaz de cokerie, et on le libère de l'ammoniac, des composés aromatiques et du naphtalène.

3. Procédé selon la revendication 1 ou 2, lors duquel on amène le gaz de cokerie vers un dispositif d'adsorption à pression alternée qui divise le gaz de cokerie en un flux d'hydrogène presque pur et en un flux de gaz résiduel contenant des hydrocarbures.

4. Procédé selon l'une quelconque des revendications 1 à 3, lors duquel on réalise le processus de haut-fourneau dans un haut-fourneau vers lequel on amène de l'oxygène techniquement pur, pour obtenir du fer et un gaz de synthèse riche en CO, soutiré en tant que gaz de haut-fourneau.

5. Procédé selon la revendication 3 ou 4, lors duquel la quantité d'agent réducteur contenant du carbone, mis en oeuvre lors du processus de haut-fourneau est supérieure à la quantité de combustible nécessaire pour la production de fer.

6. Procédé selon la revendication 4 ou 5, lors duquel on amène en supplément au haut-fourneau du CO₂ et/ou de la vapeur d'eau, pour contrôler la proportion CO/H₂ dans le gaz de haut-fourneau quittant le haut-fourneau.
